# EUROPEAN PATENT SPECIFICATION

(11) **EP 4 312 100 B1**
(45) Date of publication and mention of the grant of the patent: **17.06.2026**
(21) Application number: 22784321.6
(22) Date of filing: 02.02.2022
(51) Int. Cl.: G05B 23/02

(54) **ABNORMALITY DETECTION DEVICE, ABNORMALITY DETECTION PROGRAM, AND LEARNING DEVICE**
ANOMALIEDETEKTIONSVORRICHTUNG, ANOMALIEDETEKTIONSPROGRAMM UND LERNVORRICHTUNG
DISPOSITIF DE DÉTECTION D'ANOMALIE, PROGRAMME DE DÉTECTION D'ANOMALIE ET DISPOSITIF D'APPRENTISSAGE

(30) Priority: 05.04.2021 JP 2021064345
(43) Date of publication of application: 31.01.2024
(73) Proprietor: Chiyoda Corporation, Kanagawa 220-8765 (JP)
(72) Inventor: MINETA, Yuriya, Yokohama-shi, Kanagawa 220-8765 (JP); OBATA, Tomoyuki, Yokohama-shi, Kanagawa 220-8765 (JP)
(74) Representative: Meissner Bolte Nürnberg
(86) International application number: PCT/JP2022/004017
(87) International publication number: WO 2022/215336

(56) References cited:
- JP-A- 2001 202 124
- JP-A- 2007 065 883
- JP-A- 2011 238 148
- JP-A- 2019 024 305
- JP-A- H01 205 010
- SG-A1- 188 751

## Description

### [TECHNICAL FIELD]

The present invention relates to an abnormality detection device that detects an abnormality in a plant, an abnormality detection program, and a learning device.

### [BACKGROUND ART]

A technique for monitoring a state change of a plant has been proposed. For example, Patent Literature 1 discloses a technique in which a process value input from a plant every moment is converted into time-series process data and stored, and a plurality of pieces of process data in a predetermined inspection section is statistically processed to detect a change tendency of the process value.

Patent Literature 2 discloses a motor control system performing a drive control of a motor which drives a motor drive mechanism determines a data abnormality and a machine abnormality based on a comparison between a predetermined data abnormality determination threshold value and a Mahalanobis distance calculated based on time series detection data at a motor driving time.

Patent Literature 3 describes an abnormality detection means for generating abnormality detection data corresponding to time series data at a predetermined time and for diagnosing the presence/absence of an abnormality in the data at the predetermined time. An abnormality factor variable separation means separates and extracts abnormality factor candidate variables from the time series data at the predetermined time. An abnormality countermeasure support information means provides countermeasure support information based on the separated and extracted abnormality factor candidate variables, correlation information, and a first and second rule.

Patent Literature 4 describes a process monitoring device for performing abnormality detection processing by combining a principal component analysis (PCA) with wavelet transformation. A model constructing part is provided for constructing a process monitor model by the PCA by using process time series data stored in a data storing part. A process monitoring part is provided for calculating statistical quantity or the statistical quantity data of Hotelling's T2 distribution by using the process monitor model and the time series data. A process monitoring part is provided for executing wavelet transformation processing to the statistical quantity data to decompose the data into a plurality of time function data. Further, a process diagnostic part is provided for diagnosing process abnormality on the basis of the plurality of time function data.

### [PRIOR ART DOCUMENT]

### [Patent Literature]

[Patent Literature 1] JP 2002-278621 A
[Patent Literature 2] JP 2019 024305 A
[Patent Literature 3] SG 188 751 A1
[Patent Literature 4] JP 2007 065883 A

### [SUMMARY OF INVENTION]

### [TECHNICAL PROBLEM]

However, a plant usually includes a large number of control loops, and an abnormality of some control loops may affect other control loops. In this case, even if a process value (PV), a set point (SP), or a manipulated variable (MV) of each control loop is individually monitored, it is difficult to detect a sign of abnormality.

An object of the present disclosure is to improve a technique for detecting an abnormality in a plant.

### [SOLUTION TO PROBLEM]

The invention is set forth in the independent claims. Embodiments result from the dependent claims and the description below.

In order to solve the above problem, an abnormality detection device according to claim 1 according to one aspect of the present invention is provided.

Another aspect of the present invention is an abnormality detection program according to claim 7.

Another aspect of the present invention is a learning device according to claim 8.

### [ADVANTAGEOUS EFFECTS OF INVENTION]

According to the present disclosure, it is possible to improve a technique for detecting an abnormality in a plant.

### [BRIEF DESCRIPTION OF DRAWINGS]

Fig. 1 is a diagram illustrating an overall configuration of an abnormality detection system according to an embodiment.
Fig. 2 is a diagram illustrating an example of a monitoring target device to be monitored by an abnormality detection device according to the embodiment.
Fig. 3 is a diagram illustrating an example of temporal changes of a process value (PV) and a command value (OP).
Fig. 4 is a diagram illustrating an example of a scatter diagram in which values of PV and OP in a predetermined period are plotted.
Fig. 5 is a diagram illustrating an example of temporal changes of the PV, the OP, and indices.
Fig. 6 is a diagram illustrating an example of temporal changes of the PV, the OP, and index values of the monitoring target device illustrated in Fig. 2.
Fig. 7 is a diagram illustrating an example of temporal changes of the PV, the OP, and the index values of the monitoring target device illustrated in Fig. 2.
Fig. 8 is a diagram illustrating an example of temporal changes of the PV, the OP, and the index values of the monitoring target device illustrated in Fig. 2.
Fig. 9 is a diagram illustrating another example of the monitoring target device to be monitored by the abnormality detection device according to the embodiment.
Fig. 10 is a diagram illustrating an example of temporal changes of the PV, the OP, and the index values of the monitoring target device illustrated in Fig. 9.
Fig. 11 is a diagram illustrating an example of temporal changes of the PV, the OP, and the index values of the monitoring target device illustrated in Fig. 9.
Fig. 12 is a diagram illustrating an example of temporal changes of the PV, the OP, and the index values of the monitoring target device illustrated in Fig. 9.
Fig. 13 is a diagram illustrating an example of temporal changes of the PV, the OP, and the index values when control becomes unstable due to another control loop, disturbance, and the like.
Fig. 14 is a diagram illustrating an example in which indices calculated when a plant is operated are clustered.
Fig. 15 is a diagram illustrating an example of temporal changes in a probability that a monitoring target device transitions from a normal state to an abnormal state.
Fig. 16 is a diagram illustrating an example of temporal changes of indices in a process including a plurality of control loops.
Fig. 17 is a diagram illustrating a configuration of a learning device according to the embodiment.
Fig. 18 is a diagram illustrating a configuration of the abnormality detection device according to the embodiment.
Figs. 19(a), 19(b), and 19(c) are diagrams each illustrating an example of temporal changes of indices calculated by an abnormality detection device 10.

### [DESCRIPTION OF EMBODIMENTS]

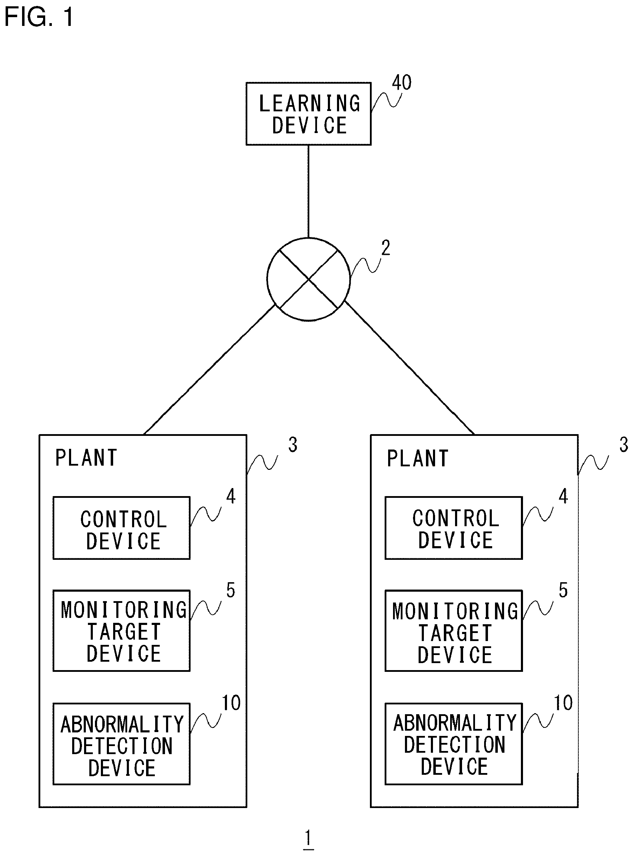

Fig. 1 illustrates an overall configuration of an abnormality detection system according to an embodiment. An abnormality detection system 1 includes a plant 3 that executes a process including a plurality of devices, a monitoring target device 5 to be monitored among the plurality of devices provided in the plant 3, a control device 4 that controls the monitoring target device 5, an abnormality detection device 10 that detects an abnormality of the monitoring target device 5, and a learning device 40 that learns a detection criterion used to detect an abnormality in the abnormality detection device 10. These devices are connected by Internet 2 which is an example of a communication means. The communication means may be any communication means other than the Internet 2.

In a process including a plurality of devices that are automatically feedback controlled independently by a plurality of control devices 4, in a case where the influences of the automatic feedback control can interfere with each other, the influence of an abnormality occurring in a certain device may be propagated to other devices, and the behavior of the entire process may become unstable. The abnormality detection system 1 according to the present embodiment monitors the monitoring target device 5 by the abnormality detection device 10 and detects a sign of an abnormality in the monitoring target device 5, so that it is possible to appropriately deal with the influence of the abnormality before the influence of the abnormality expands to other devices. All of the plurality of devices may be set as the monitoring target device 5, or some of the devices may be set as the monitoring target device 5. In the latter case, among the plurality of devices, a specific important device that may cause serious damage or danger when an abnormality occurs may be set as the monitoring target device 5. In addition, a device that can trigger an abnormality of the important device may be set as the monitoring target device 5. The device that can trigger the abnormality of the important device may be extracted by a fault tree analysis (FTA) in which the abnormality of the important device is set as a high-order event.

The learning device 40 acquires operation record data acquired from the plant 3 when the plant 3 is operated for a predetermined period, and learns the detection criterion using the operation record data. The learning device 40 may learn the detection criterion using the operation record data acquired from the plurality of plants 3 including the same type of monitoring target devices 5. As a result, the learning efficiency can be improved, so that the accuracy of the detection criterion can be further improved.

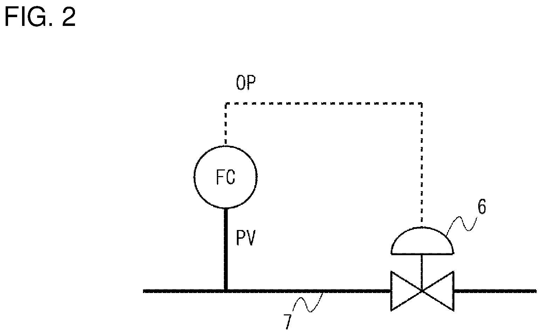

Fig. 2 illustrates an example of the monitoring target device 5 to be monitored by the abnormality detection device 10 according to the embodiment. A valve 6, which is an example of the monitoring target device 5, is opened and closed to control the flow rate of a fluid flowing through a pipe 7. The opening degree of the valve 6 is controlled by a flow controller FC which is an example of the control device 4. The flow controller FC acquires the flow rate of the fluid flowing through the pipe 7 as a process value (PV), calculates a command value (OP) of the opening degree of the valve 6 by PID control or the like so that the flow rate becomes a set point (SP), and transmits the command value (OP) to the valve 6.

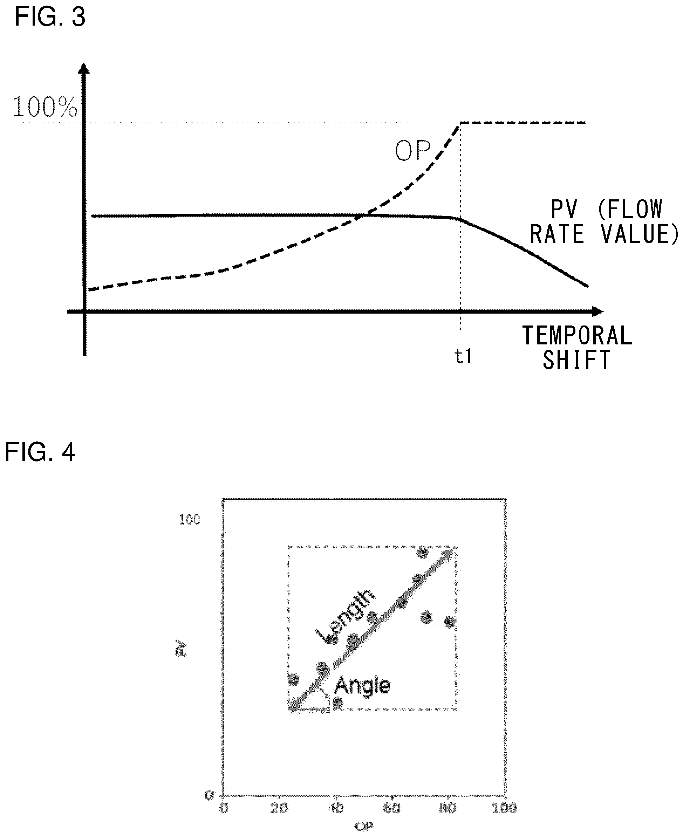

Fig. 3 illustrates an example of temporal changes of the process value (PV) and the command value (OP). In Fig. 3, a solid line indicates the PV, and a broken line indicates the OP. In a period until t1, the PV is maintained substantially constant because the flow controller FC continues to change the OP by feedback control. When the opening degree of the valve 6 reaches 100% at t1, since the opening degree of the valve 6 cannot be changed any more, the PV starts to take an abnormal value. In this example, the abnormality of the PV is detected after t1, but a sign of the abnormality can be seen before t1 in consideration of not only the fluctuation of the PV but also the fluctuation of the OP. That is, even before t1, there is a situation in which the PV cannot be maintained constant unless the opening degree of the valve 6 is continuously changed, and it is considered that some abnormality has occurred before the PV actually takes the abnormal value. However, when only the PV is monitored as in the related art, the abnormality cannot be detected until after t1.

The abnormality detection system 1 of the present embodiment monitors not only the PV but also the OP to detect a sign of abnormality before the PV takes the abnormal value. For example, as in the example illustrated in Fig. 3, in a case where the OP greatly fluctuates when the PV is to be kept constant, there is a possibility that it is a sign of abnormality. In addition, a case where the PV greatly fluctuates even though the OP is substantially constant may be a sign of abnormality. On the other hand, when the PV is to be changed in normal control, the PV and the OP may fluctuate simultaneously. Therefore, in the abnormality detection system 1 of the present embodiment, the abnormality is detected on the basis of the relationship between a fluctuation range of the PV and a fluctuation range of the OP.

Fig. 4 illustrates an example of a scatter diagram in which values of the PV and the OP in a predetermined period are plotted. In Fig. 4, the OP is normalized such that a range is 0 to 100, and the PV is normalized and plotted with the minimum value of a set range of a distributed control system (DCS) as 0 and the maximum value as 100. In the abnormality detection system 1 of the present embodiment, a length L of a diagonal line of the smallest rectangle (plot region) covering each point plotted on the scatter diagram and an angle θ between the diagonal line and a horizontal axis are used as indices for detecting an abnormality. The indices correspond to the magnitude and inclination of a vector having the fluctuation range of the PV and the fluctuation range of the OP in the predetermined period as components. The indices used by the abnormality detection device 10 to detect an abnormality may be one or both of the length L of the diagonal line and the angle θ, or may be a value calculated on the basis of one or both of the length L of the diagonal line and the angle θ. In addition, the indices may be an area, a shape, and the like of the plot region, or may be a statistical value calculated from the values of the PV and the OP by a statistical method.

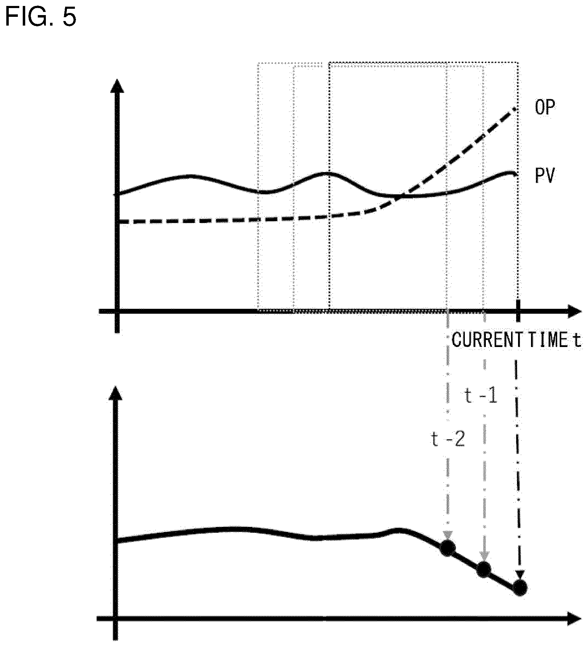

Fig. 5 illustrates an example of temporal changes of the PV, the OP, and indices. The indices at time t are calculated from the fluctuation ranges of the PV and the OP in a predetermined period immediately before time t. Similarly, the indices at time t-1 are calculated from the fluctuation ranges of the PV and the OP in a predetermined period immediately before time t-1. In this manner, by periodically calculating the indices at predetermined timing, for example, at predetermined time intervals and monitoring the value, it is possible to quickly detect an abnormality.

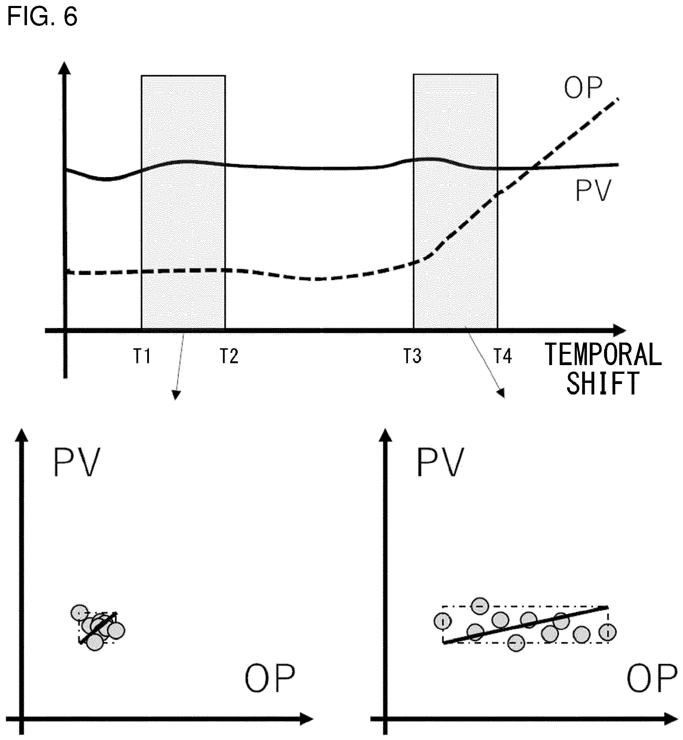

Fig. 6 illustrates an example of temporal changes of the PV, the OP, and the index values of the monitoring target device 5 illustrated in Fig. 2. In the periods T1 to T2, the process state is stable, and the fluctuation range of the PV and the fluctuation range of the OP are small. Therefore, since the plot region has a shape close to a small square, the length L of the diagonal line is short and the angle θ is close to 45°. In the periods T3 to T4, for example, it is assumed that blockage has occurred downstream and the flow rate is lower than normal. When such an abnormality occurs, since it is necessary to increase the opening degree of the valve 6 in order to maintain the flow rate constant, the fluctuation range of the PV still remains small, but the fluctuation range of the OP becomes large. Therefore, since the plot region is a horizontally long rectangle, the length L of the diagonal line is long and the angle θ is close to 0°.

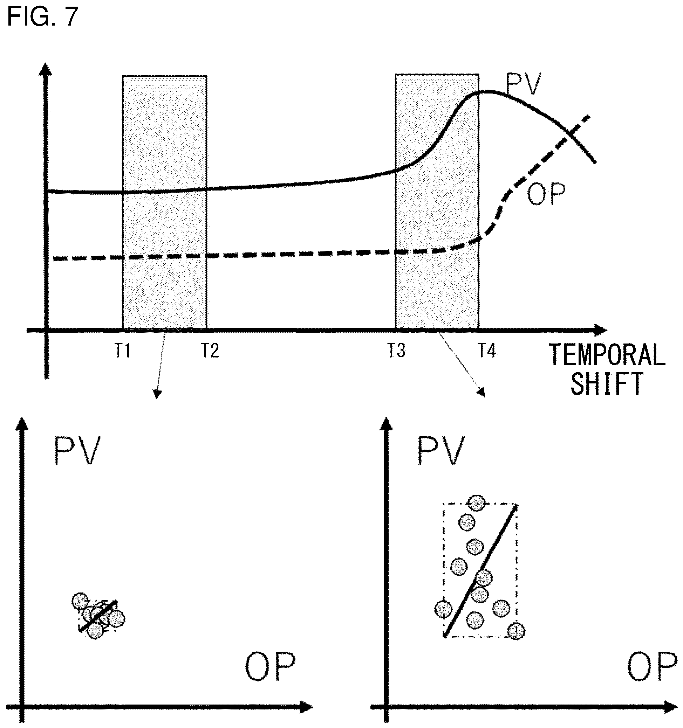

Fig. 7 illustrates an example of temporal changes of the PV, the OP, and the index values of the monitoring target device 5 illustrated in Fig. 2. The periods T1 to T2 are similar to those in the case of Fig. 6. In the periods T3 to T4, for example, it is assumed that the flow rate increases due to a rapid change in an upstream pressure. When such an abnormality occurs, the control of the flow controller FC cannot catch up and only the PV fluctuates, so that the fluctuation range of the OP is small but the fluctuation range of the PV is large. Therefore, since the plot region is a vertically long rectangle, the length L of the diagonal line is long and the angle θ is close to 90°.

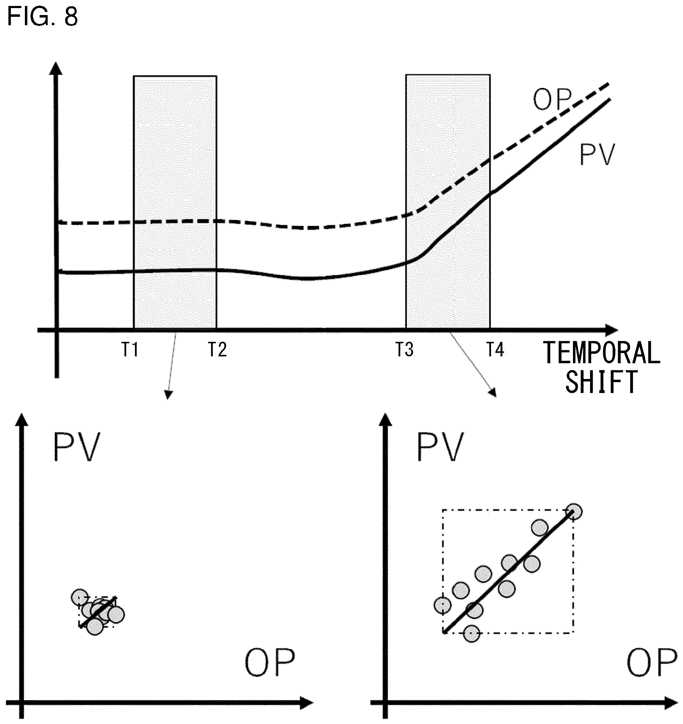

Fig. 8 illustrates an example of temporal changes of the PV, the OP, and the index values of the monitoring target device 5 illustrated in Fig. 2. The periods T1 to T2 are similar to those in the case of Fig. 6. For example, it is assumed that the set point is changed in the periods T3 to T4. At this time, as normal control, the OP rises to raise the flow rate to the set point, and the PV also rises following the rise, so that both the fluctuation range of the PV and the fluctuation range of the OP increase. Therefore, since the plot region has a shape close to a large square, the length L of the diagonal line is long and the angle θ is close to 45°.

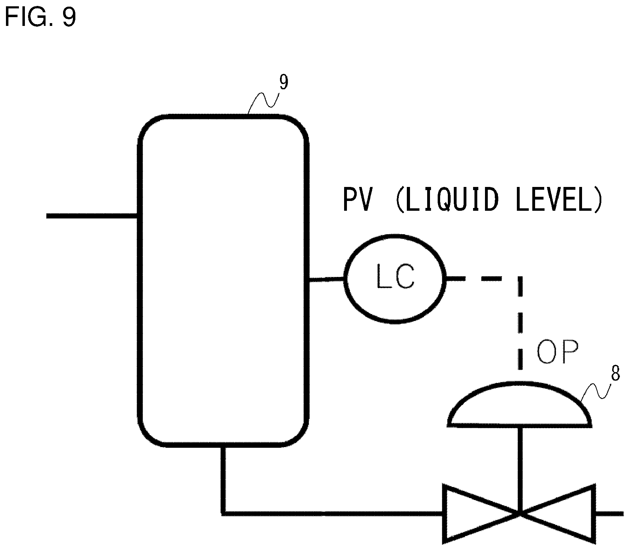

Fig. 9 illustrates another example of the monitoring target device 5 to be monitored by the abnormality detection device 10 according to the embodiment. A valve 8, which is an example of the monitoring target device 5, is opened and closed to control a liquid level of the liquid in a container 9. The opening degree of the valve 8 is controlled by a liquid level controller LC which is an example of the control device 4. The liquid level controller LC acquires the liquid level of the liquid in the container 9 as the process value (PV), calculates the command value (OP) of the opening degree of the valve 6 by PID control or the like so that the flow rate becomes the set point (SP), and transmits the command value (OP) to the valve 6.

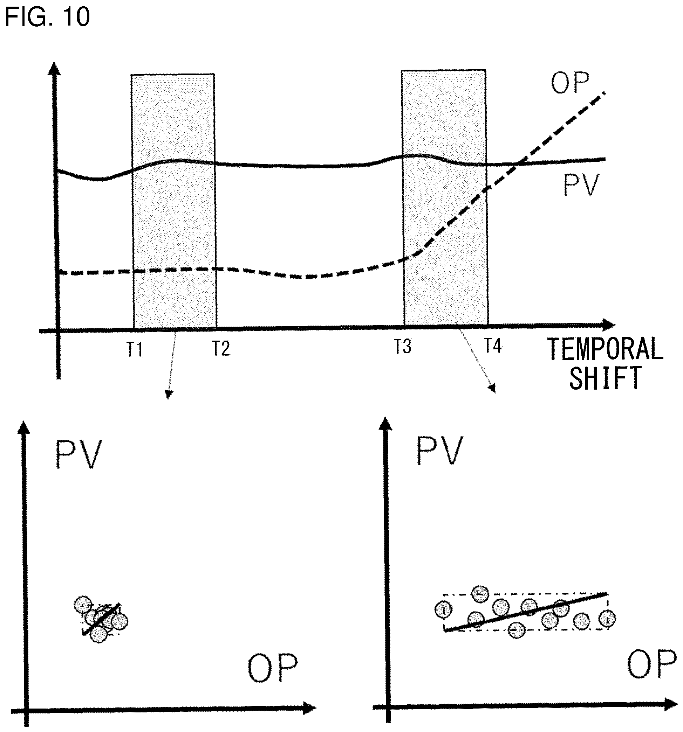

Fig. 10 illustrates an example of temporal changes of the PV, the OP, and the index values of the monitoring target device 5 illustrated in Fig. 9. In the periods T1 to T2, the process state is stable, and the fluctuation range of the PV and the fluctuation range of the OP are small. Therefore, since the plot region has a shape close to a small square, the length L of the diagonal line is short and the angle θ is close to 45°. In the periods T3 to T4, for example, it is assumed that blockage has occurred downstream and the amount of liquid flowing out of the container 9 is smaller than normal. When such an abnormality occurs, since it is necessary to increase the opening degree of the valve 8 in order to maintain the liquid level constant, the fluctuation range of the PV still remains small, but the fluctuation range of the OP becomes large. Therefore, since the plot region is a horizontally long rectangle, the length L of the diagonal line is long and the angle θ is close to 0°.

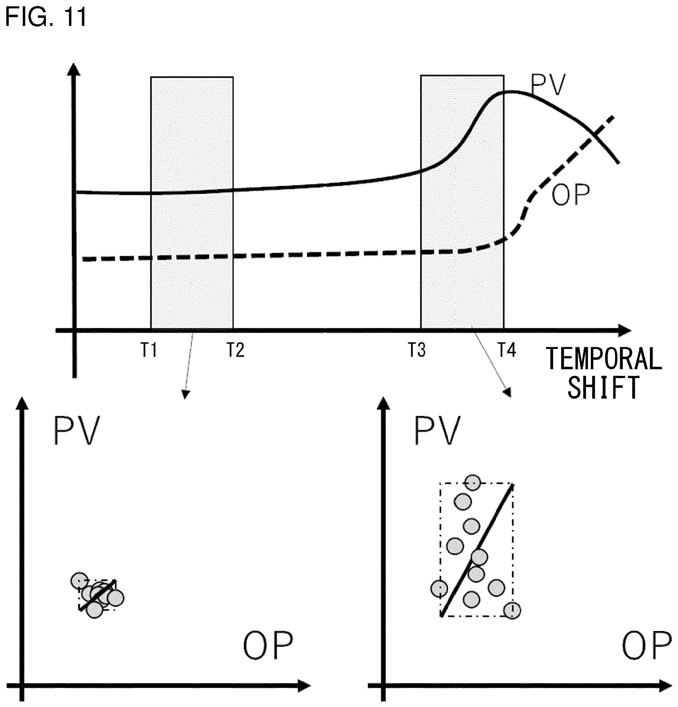

Fig. 11 illustrates an example of temporal changes of the PV, the OP, and the index values of the monitoring target device 5 illustrated in Fig. 9. The periods T1 to T2 are similar to those in the case of Fig. 10. In the periods T3 to T4, for example, it is assumed that the liquid level rises due to a rapid rise in an inflow amount from the upstream. When such an abnormality occurs, the control of the liquid level controller LC cannot catch up and only the PV fluctuates, so that the fluctuation range of the OP is small but the fluctuation range of the PV is large. Therefore, since the plot region is a vertically long rectangle, the length L of the diagonal line is long and the angle θ is close to 90°.

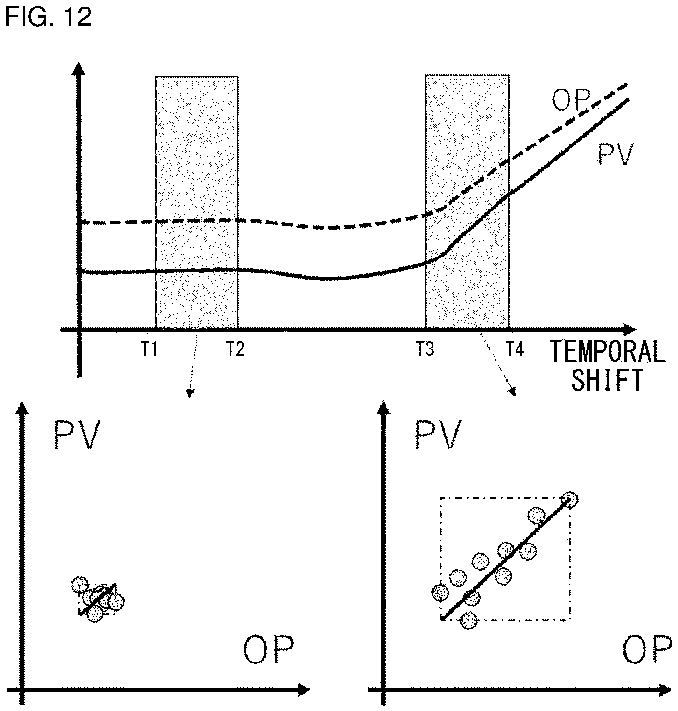

Fig. 12 illustrates an example of temporal changes of the PV, the OP, and the index values of the monitoring target device 5 illustrated in Fig. 9. The periods T1 to T2 are similar to those in the case of Fig. 10. For example, it is assumed that the set point is changed in the periods T3 to T4. At this time, as normal control, the OP rises to raise the liquid level to the set point, and the PV also rises following the rise, so that both the fluctuation range of the PV and the fluctuation range of the OP increase. Therefore, since the plot region has a shape close to a large square, the length L of the diagonal line is long and the angle θ is close to 45°.

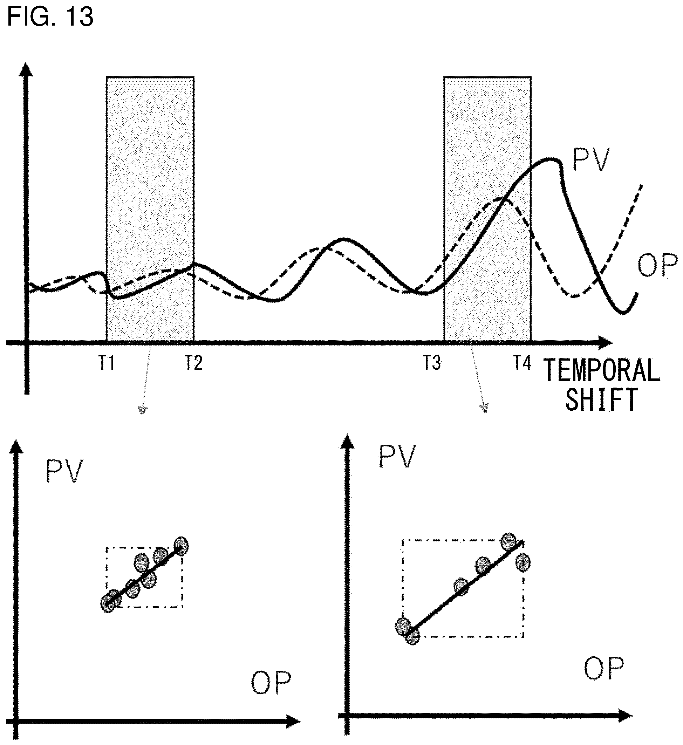

Fig. 13 illustrates an example of temporal changes of the PV, the OP, and the index values when control becomes unstable due to another control loop, disturbance, and the like. In the periods T1 to T2, the process state is stable, and the fluctuation range of the PV and the fluctuation range of the OP are small. Therefore, since the plot region has a shape close to a small square, the length L of the diagonal line is short and the angle θ is close to 45°. In the periods T3 to T4, the control cannot catch up with the influence of other control loops, disturbance, and the like, and the fluctuation range of the PV and the fluctuation range of the OP are large. Therefore, since the plot region has a shape close to a large square, the length L of the diagonal line is long and the angle θ is close to 45°.

As described above, since the length L and the angle θ of the diagonal line of the plot region are correlated with the sign of abnormality of the monitoring target device 5, the length L and the angle θ can be used as indices for detecting abnormality in individual control loops. For example, the abnormality detection device 10 may detect the abnormality of the monitoring target device 5 when the relationship between the normalized PV fluctuation range and the normalized OP fluctuation range is out of the normal range. The relationship between the fluctuation range of the PV and the fluctuation range of the OP may be, for example, a ratio between the fluctuation range of the PV and the fluctuation range of the OP. The abnormality detection device 10 may determine the abnormality on the basis of the tendency that the shape of the vector having the fluctuation range of the PV and the fluctuation range of the OP as components becomes horizontally long or vertically long from the shape during the stable operation, or becomes large with the same shape.

The abnormality detection device 10 may detect the abnormality of the monitoring target device 5 further on the basis of the set point of a control operation amount in the predetermined period. By further considering the set point, it is possible to determine a case where normal control is performed due to a change in the set point as illustrated in Figs. 8 and 12, so that the detection accuracy can be improved.

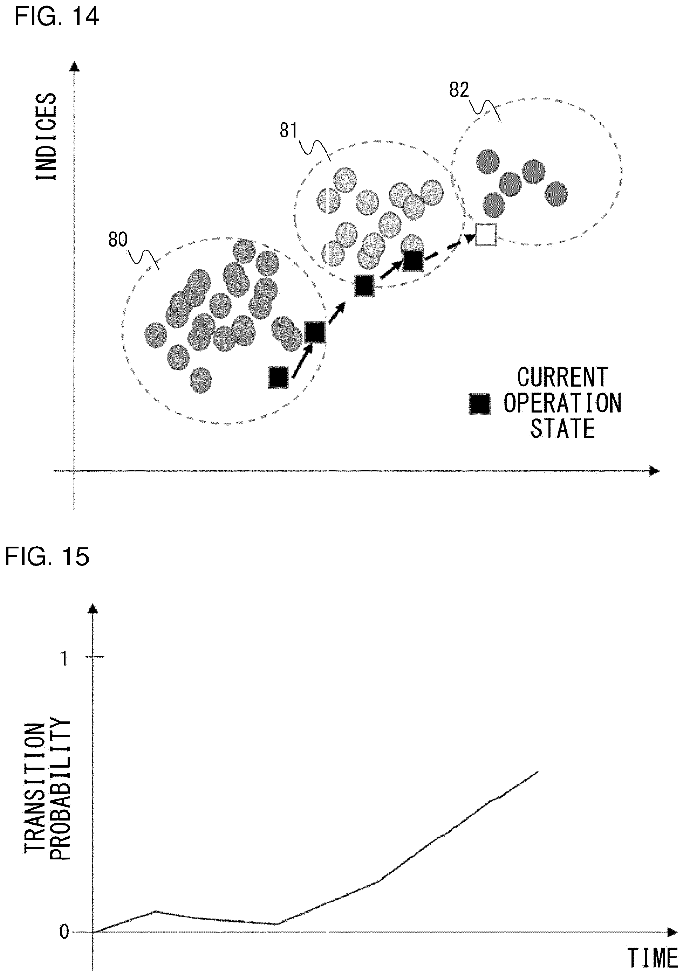

Fig. 14 illustrates an example in which indices calculated when the plant 3 is operated are clustered. The learning device 40 classifies the indices for each state of the monitoring target device 5 by clustering the indices calculated from the PV and the OP when the plant 3 was operated in the past. The learning device 40 may perform clustering using the length L and the angle θ of the diagonal line of the plot region as indices, or may perform clustering by reducing the number of dimensions of three or more indices. A region 80 corresponds to clustering of indices in the normal state, a region 81 corresponds to clustering in a state of transition from the normal state to the abnormal state, and a region 82 corresponds to clustering in the abnormal state. The abnormality detection device 10 calculates indices during the operation of the plant 3 and determines clustering to which the calculated indices belong, so that the current state of the monitoring target device 5 can be grasped. The future state of the monitoring target device 5 can be predicted by monitoring the temporal changes of indices.

Fig. 15 illustrates an example of temporal changes in a probability that the monitoring target device 5 transitions from the normal state to the abnormal state. The transition probability may be calculated on the basis of indices calculated from the PV and the OP. The algorithm for calculating the transition probability may be learned by the learning device 40. The transition probability calculation algorithm may be a neural network that inputs indices and outputs a transition probability. The learning device 40 may learn the transition probability calculation algorithm using, as learning data, indices calculated from the PV and the OP when the plant 3 was operated in the past and data representing the state of the monitoring target device 5 at that time. The state of the monitoring target device 5 may be defined by a specific process value range or the like. The abnormality detection device 10 can grasp the current transition probability by calculating indices during the operation of the plant 3 and inputting the calculated indices to the transition probability calculation algorithm. The future state of the monitoring target device 5 can be predicted by monitoring the temporal change of the index.

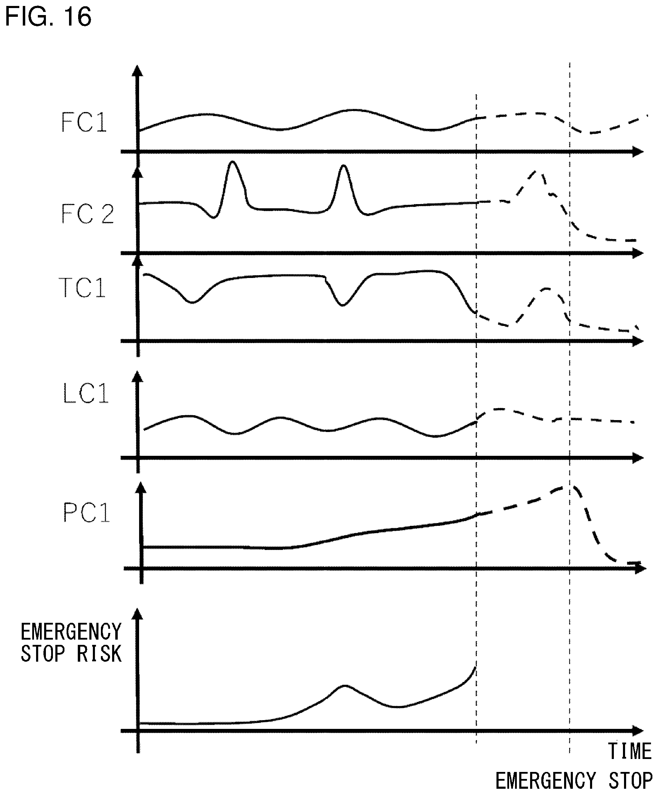

Fig. 16 illustrates an example of temporal changes of indices in a process including a plurality of control loops. The first to fifth stages indicate temporal changes of the indices calculated in the plurality of control loops controlled by the plurality of control devices 4. The sixth stage indicates a temporal change in the risk of emergency stop of the entire process calculated on the basis of these indices. An algorithm for calculating the risk of the emergency stop may be learned by the learning device 40. In the emergency stop risk calculation algorithm, the indices calculated in each control loop may be weighted according to the risk that the abnormality in each control loop causes the emergency stop of the entire process. The emergency stop risk calculation algorithm may be a neural network that inputs indices in each control loop and outputs the emergency stop risk. The learning device 40 may learn the emergency stop risk calculation algorithm using, as learning data, indices calculated from the PV and the OP when the plant 3 was operated in the past, the risk of the emergency stop at that time, the time until the emergency stop, and the like. The abnormality detection device 10 calculates indices in each control loop during the operation of the plant 3 and inputs the calculated indices to the emergency stop risk calculation algorithm, thereby being able to grasp the current emergency stop risk. This makes it possible to predict the future state of the entire process, so that an emergency stop of the process can be avoided by taking appropriate measures as necessary.

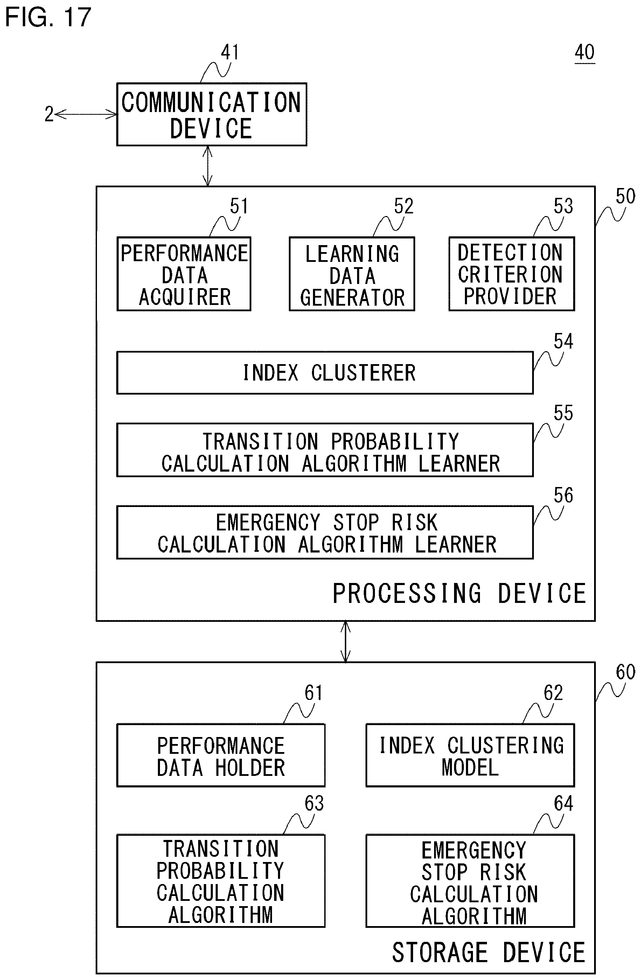

Fig. 17 illustrates a configuration of the learning device 40 according to the embodiment. The learning device 40 includes a communication device 41, a processing device 50, and a storage device 60.

The communication device 41 controls wireless or wired communication. The communication device 41 transmits and receives data to and from other devices via the Internet 2.

The storage device 60 stores data and a computer program used by the processing device 50. The storage device 60 stores a performance data holder 61, an index clustering model 62, a transition probability calculation algorithm 63, and an emergency stop risk calculation algorithm 64. The index clustering model 62, the transition probability calculation algorithm 63, and the emergency stop risk calculation algorithm 64 function as detection criterion used by the abnormality detection device 10 to detect an abnormality in the plant 3.

The performance data holder 61 holds performance data such as the PV and the OP acquired when the plant 3 is operated, the state of the monitoring target device 5, and the state of the process.

The processing device 50 includes a performance data acquirer 51, a learning data generator 52, a detection criterion provider 53, an index clusterer 54, a transition probability calculation algorithm learner 55, and an emergency stop risk calculation algorithm learner 56. In terms of hardware components, these configurations are realized by a CPU, a memory, a program loaded in a memory, and the like of an arbitrary computer, but here, functional blocks realized by cooperation thereof are illustrated. Therefore, it is understood by those skilled in the art that these functional blocks can be realized in various forms by only hardware, only software, or a combination thereof.

The performance data acquirer 51 acquires performance data such as the PV and the OP acquired when the plant 3 is operated, the state of the monitoring target device 5, and the state of the process, and stores the performance data in the performance data holder 61.

The learning data generator 52 generates learning data from the performance data stored in the performance data holder 61. The learning data generator 52 calculates indices from the PV and the OP. The learning data generator 52 calculates a numerical value representing the state of the monitoring target device 5 on the basis of the specific PV or the like.

The index clusterer 54 learns the index clustering model 62 by clustering the indices calculated by the learning data generator 52.

The transition probability calculation algorithm learner 55 learns the transition probability calculation algorithm 63 using the learning data generated by the learning data generator 52. When the indices are input to an input layer, the transition probability calculation algorithm learner 55 may learn the transition probability calculation algorithm 63 by adjusting an intermediate layer of the neural network so that the transition probability at that time is output from an output layer.

The emergency stop risk calculation algorithm learner 56 learns the emergency stop risk calculation algorithm 64 using the learning data generated by the learning data generator 52. When the indices in each control loop are input to the input layer, the emergency stop risk calculation algorithm learner 56 may learn the emergency stop risk calculation algorithm 64 by adjusting the intermediate layer of the neural network so that the risk of the emergency stop at that time is output from the output layer.

The detection criterion provider 53 provides the learned index clustering model 62, the transition probability calculation algorithm 63, and the emergency stop risk calculation algorithm 64 to the abnormality detection device 10.

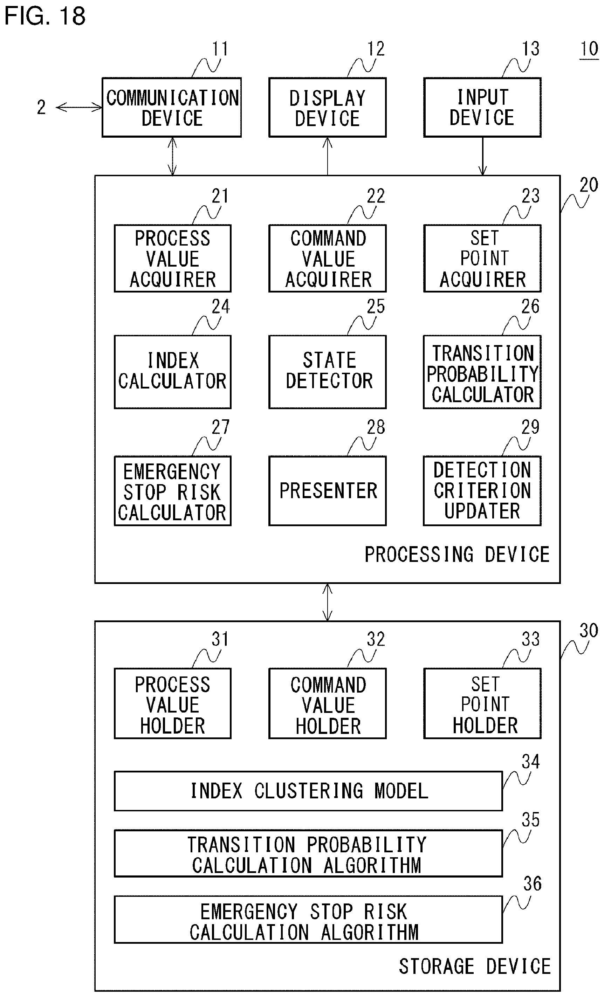

Fig. 18 illustrates a configuration of the abnormality detection device 10 according to the embodiment. The abnormality detection device 10 includes a communication device 11, a display device 12, an input device 13, a processing device 20, and a storage device 30.

The communication device **11** controls wireless or wired communication. The communication device **11** transmits and receives data to and from other devices via the **In**ternet 2. The display device 12 displays the display image generated by the processing device 20. The input device 13 inputs an instruction to the processing device 20.

The storage device 30 stores data and a computer program used by the processing device 20. The storage device 30 stores a process value holder 31, a command value holder 32, a set point holder 33, an index clustering model 34, a transition probability calculation algorithm 35, and an emergency stop risk calculation algorithm 36.

The processing device 20 includes a process value acquirer 21, a command value acquirer 22, a set point acquirer 23, an index calculator 24, a state detector 25, a transition probability calculator 26, an emergency stop risk calculator 27, a presenter 28, and a detection criterion updater 29. These configurations can also be realized in various forms by only hardware, only software, or a combination thereof.

The process value acquirer 21 acquires a process value from the control device 4, the monitoring target device 5, a sensor that detects the process value, and the like, and stores the process value in the process value holder 31. The command value acquirer 22 acquires a command value from the control device 4 and stores the command value in the command value holder 32. The set point acquirer 23 acquires a set point from the control device 4 and stores the set point in the set point holder 33.

The index calculator 24 calculates indices on the basis of the process value of the predetermined period stored in the process value holder 31 and the command value of the predetermined period stored in the command value holder 32.

The state detector 25 detects the state of the monitoring target device 5 by inputting the indices calculated by the index calculator 24 to the index clustering model 34.

The transition probability calculator 26 calculates the transition probability by inputting the indices calculated by the index calculator 24 to the transition probability calculation algorithm 35.

The emergency stop risk calculator 27 calculates the risk of emergency stop by inputting the indices in each control loop calculated by the index calculator 24 to the emergency stop risk calculation algorithm 36.

The presenter 28 displays, on the display device 12, the detection result by the state detector 25, the transition probability calculated by the transition probability calculator 26, and the risk of the emergency stop calculated by the emergency stop risk calculator 27. In addition, the presenter 28 displays, on the display device 12, a temporal change in the shape of the vector having the fluctuation range of the process value and the fluctuation range of the command value as components. This allows the operator to accurately predict the future state of the entire process and to avoid an emergency stop of the process by taking appropriate measures as necessary.

The detection criterion updater 29 acquires the index clustering model 62, the transition probability calculation algorithm 63, or the emergency stop risk calculation algorithm 64 relearned by the learning device 40 from the learning device 40, and updates the index clustering model 34, the transition probability calculation algorithm 35, or the emergency stop risk calculation algorithm 36.

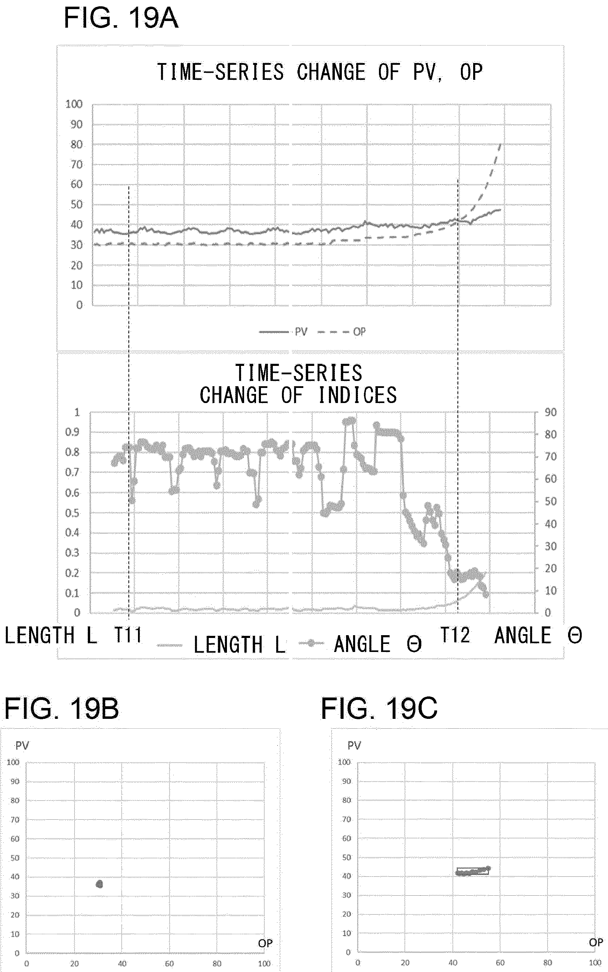

Figs. 19(a), 19(b), and 19(c) each illustrate an example of temporal changes of indices calculated by the abnormality detection device 10. Fig. 19(a) illustrates temporal changes of the PV and the OP and temporal changes of calculated indices (length L of diagonal line and angle θ). Fig. 19(b) is a scatter diagram of the PV and the OP at a predetermined time before time T11, and Fig. 19(c) is a scatter diagram of the PV and the OP at a predetermined time before time T12. From immediately before time T12, the OP starts to take an abnormal value, and similarly, the indices also start to take an abnormal value greatly deviating from the normal value. Therefore, it is possible to accurately detect a sign of abnormality in the control loop on the basis of the indices.

The present invention has been described above on the basis of the embodiments.

### [INDUSTRIAL APPLICABILITY]

The present invention is applicable to an abnormality detection device that detects an abnormality in a plant.

### [REFERENCE SIGNS LIST]

1 abnormality detection system, 3 plant, 4 control device, 5 monitoring target device, 6 valve, 7 pipe, 8 valve, 9 container, 10 abnormality detection device, 21 process value acquirer, 22 command value acquirer, 23 set point acquirer, 24 index calculator, 25 state detector, 26 transition probability calculator, 27 emergency stop risk calculator, 28 presenter, 29 detection criterion updater, 31 process value holder, 32 command value holder, 33 set point holder, 34 index clustering model, 35 transition probability calculation algorithm, 36 emergency stop risk calculation algorithm, 40 learning device, 51 performance data acquirer, 52 learning data generator, 53 detection criterion provider, 54 index clusterer, 55 transition probability calculation algorithm learner, 56 emergency stop risk calculation algorithm learner, 61 performance data holder, 62 index clustering model, 63 transition probability calculation algorithm, 64 emergency stop risk calculation algorithm

## Claims

1. An abnormality detection device (10) comprising:
a process value acquirer (21) structured to acquire, during operation of a plant (3) including a plurality of devices, a process value (PV) of at least one monitoring target device (5) among the plurality of devices;
a command value acquirer (22) structured to acquire a command value (OP) of a control operation amount for controlling the monitoring target device (5); and
an abnormality detector structured to detect an abnormality of the monitoring target device (5) on a basis of a relationship between a fluctuation range of a process value (PV) acquired by the process value acquirer (21) and a fluctuation range of a command value (OP) acquired by the command value acquirer (22) during a predetermined period , wherein
the abnormality detector is structured to detect an abnormality of the monitoring target device (5) using a detection criterion for detecting an abnormality of the monitoring target device (5) on a basis of an index related to a relationship between a fluctuation range of the process value (PV) and a fluctuation range of the command value (OP), **characterised in that**
the index is a magnitude or an inclination of a vector having a fluctuation range of the process value (PV) and a fluctuation range of the command value (OP) as components.

2. The abnormality detection device (10) according to claim 1, wherein
the detection criterion is machine-learned on a basis of a fluctuation range of the process value (PV), a fluctuation range of the command value (OP), and a state of the monitoring target device (5) in a past predetermined period.

3. The abnormality detection device (10) according to any one of claims 1 or 2,
wherein
the abnormality detector is structured to detect an abnormality of the monitoring target device (5) when a relationship between a fluctuation range of the process value (PV) and a fluctuation range of the command value (OP) is out of a normal range.

4. The abnormality detection device (10) according to any of claims 1 to 3,
wherein
the abnormality detection device (10) determines an abnormality on a basis of a tendency that a shape of a rectangle region whose horizontal length is a fluctuation range of the process value (PV) and whose vertical length is a fluctuation range of the command value (OP) becomes horizontally long or vertically long from a shape during a stable operation, or becomes large with the same shape.

5. The abnormality detection device (10) according to claim 4, wherein
the abnormality detection device (10) displays a temporal change of the shape of the region on a display device (12).

6. The abnormality detection device (10) according to any one of claims 1 to 5,
wherein
the abnormality detector is structured to detect an abnormality of the monitoring target device (5) further on a basis of a set point of the control operation amount in the predetermined period.

7. An abnormality detection program causing a computer to function as
a process value acquirer (21) structured to acquire, during operation of a plant (3) including a plurality of devices, a process value (PV) of at least one monitoring target device (5) among the plurality of devices;
a command value acquirer (22) structured to acquire a command value (OP) of a control operation amount for controlling the monitoring target device (5); and
an abnormality detector structured to detect an abnormality of the monitoring target device (5) on a basis of a relationship between a fluctuation range of a process value (PV) acquired by the process value acquirer (21) and a fluctuation range of a command value (OP) acquired by the command value acquirer (22) during a predetermined period, wherein
the abnormality detector is structured to detect an abnormality of the monitoring target device (5) using a detection criterion for detecting an abnormality of the monitoring target device (5) on a basis of an index related to a relationship between a fluctuation range of the process value (PV) and a fluctuation range of the command value (OP), **characterised in that**
the index is a magnitude or an inclination of a vector having a fluctuation range of the process value (PV) and a fluctuation range of the command value (OP) as components.

8. A learning device (40) configured to learn the detection criterion used by the abnormality detection device of any one of claims 1 to 6, comprising:
a learning data acquirer structured to acquire, as learning data, a fluctuation range of a process value (PV) of at least one monitoring target device (5) among a plurality of devices, a fluctuation range of a command value (OP) of a control operation amount for controlling the monitoring target device (5), and information indicating a state of the monitoring target device (5), which are acquired when a plant (3) including the plurality of devices is operated for a predetermined period; and
a learner structured to learn a detection criterion for detecting an abnormality of the monitoring target device (5) on a basis of an index related to a relationship between the fluctuation range of the process value (PV) and the fluctuation range of the command value (OP) on a basis of the learning data,
**characterised in that** the index is a magnitude or an inclination of a vector having a fluctuation range of the process value (PV) and a fluctuation range of the command value (OP) as components.

## Patentansprüche

1. Vorrichtung zur Erkennung von Abnormalitäten (10), umfassend:
einen Prozesswert-Erfasser (21), der so ausgebildet ist, dass er während des Betriebs einer Anlage (3), die eine Vielzahl von Vorrichtungen umfasst, einen Prozesswert (PV) mindestens einer zu überwachenden Vorrichtung (5) aus der Vielzahl von Vorrichtungen erfasst;
einen Sollwert-Erfasser (22), der so ausgelegt ist, dass er einen Sollwert (OP) eines Regelungsbetrags zur Steuerung der zu überwachenden Vorrichtung (5) erfasst; und
einen Abnormalitäterkenner, der so ausgelegt ist, dass er eine Abnormalität der zu überwachenden Vorrichtung (5) auf der Grundlage einer Beziehung zwischen einem Schwankungsbereich eines vom Prozesswert-Erfasser (21) erfassten Prozesswerts (PV) und einem Schwankungsbereich eines vom Sollwert-Erfasser (22) erfassten Sollwerts (OP) während eines vorbestimmten Zeitraums erkennt, wobei
der Abnormalitäterkenner so ausgelegt ist, dass er eine Abnormalität der zu überwachenden Vorrichtung (5) unter Verwendung eines Erkennungskriteriums zum Erkennen einer Abnormalität der zu überwachenden Vorrichtung (5) auf der Grundlage eines Indexes erkennt, der sich auf eine Beziehung zwischen einem Schwankungsbereich des Prozesswerts (PV) und einem Schwankungsbereich des Befehlswerts (OP) bezieht,
**dadurch gekennzeichnet, dass**
der Index eine Größe oder eine Steigung eines Vektors ist, der einen Schwankungsbereich des Prozesswerts (PV) und einen Schwankungsbereich des Sollwerts (OP) als Komponenten aufweist.

2. Vorrichtung zur Erkennung von Abnormalitäten (10) nach Anspruch 1, wobei
das Erkennungskriterium auf der Grundlage eines Schwankungsbereichs des Prozesswerts (PV), eines Schwankungsbereichs des Sollwerts (OP) und eines Zustands der zu überwachenden Vorrichtung (5) in einem vergangenen vorbestimmten Zeitraum maschinell erlernt wird.

3. Vorrichtung zur Erkennung von Abnormalitäten (10) nach einem der Ansprüche 1 oder 2, wobei
der Abnormalitäterkenner so ausgelegt ist, dass er eine Abnormalität der zu überwachenden Vorrichtung (5) erkennt, wenn eine Beziehung zwischen einem Schwankungsbereich des Prozesswerts (PV) und einem Schwankungsbereich des Sollwerts (OP) außerhalb eines Normalbereichs liegt.

4. Vorrichtung zur Erkennung von Abnormalitäten (10) nach einem der Ansprüche 1 bis 3, wobei
die Vorrichtung zur Erkennung von Abnormalitäten (10) eine Abnormalität auf der Grundlage einer Tendenz ermittelt, wonach die Form eines rechteckigen Bereichs, dessen horizontale Länge dem Schwankungsbereich des Prozesswerts (PV) und dessen vertikale Länge dem Schwankungsbereich des Sollwerts (OP) entspricht, gegenüber einer Form während eines stabilen Betriebs entweder horizontal oder vertikal länger wird oder bei gleicher Form größer wird.

5. Vorrichtung zur Erkennung von Abnormalitäten (10) nach Anspruch 4, wobei
die Vorrichtung zur Erkennung von Abnormalitäten (10) eine zeitliche Veränderung der Form des Bereichs auf einer Anzeigevorrichtung (12) anzeigt.

6. Vorrichtung zur Erkennung von Abnormalitäten (10) gemäß einem der Ansprüche 1 bis 5, wobei
der Abnormalitäterkenner so ausgelegt ist, dass er eine Abnormalität der zu überwachenden Vorrichtung (5) ferner auf der Grundlage eines Sollwerts des Regelungsbetrags in dem vorbestimmten Zeitraum erkennt.

7. Programm zur Erkennung von Abnormalitäten, das einen Computer dazu veranlasst, als
ein Prozesswert-Erfasser (21), der so ausgelegt ist, dass er während des Betriebs einer Anlage (3), die eine Vielzahl von Vorrichtungen umfasst, einen Prozesswert (PV) von mindestens einer der zu überwachenden Vorrichtungen (5) unter der Vielzahl von Vorrichtungen erfasst;
einen Sollwert-Erfasser (22), der so ausgelegt ist, dass er einen Sollwert (OP) eines Regelungsbetrags zur Steuerung der zu überwachenden Vorrichtung (5) erfasst; und
einen Abnormalitäterkenner, der so ausgelegt ist, dass er eine Abnormalität der zu überwachenden Vorrichtung (5) auf der Grundlage einer Beziehung zwischen einem Schwankungsbereich eines vom Prozesswert-Erfasser (21) erfassten Prozesswerts (PV) und einem Schwankungsbereich eines vom Sollwert-Erfasser (22) erfassten Sollwerts (OP) während eines vorbestimmten Zeitraums erkennt, zu fungieren, wobei
der Abnormalitäterkenner so ausgelegt ist, dass er eine Abnormalität der zu überwachenden Vorrichtung (5) unter Verwendung eines Erkennungskriteriums zum Erkennen einer Abnormalität der zu überwachenden Vorrichtung (5) auf der Grundlage eines Indexes erkennt, der sich auf eine Beziehung zwischen einem Schwankungsbereich des Prozesswerts (PV) und einem Schwankungsbereich des Befehlswerts (OP) bezieht,
**dadurch gekennzeichnet, dass**
der Index eine Größe oder eine Steigung eines Vektors ist, der einen Schwankungsbereich des Prozesswerts (PV) und einen Schwankungsbereich des Sollwerts (OP) als Komponenten aufweist.

8. Lernvorrichtung (40), die so konfiguriert ist, dass sie das von der Vorrichtung zur Erkennung von Abnormalitäten gemäß einem der Ansprüche 1 bis 6 verwendete Erkennungskriterium erlernt, umfassend:
einen Lerndatenerfasser, der so aufgebaut ist, dass er als Lerndaten einen Schwankungsbereich eines Prozesswerts (PV) mindestens einer zu überwachenden Vorrichtung (5) aus einer Vielzahl von Vorrichtungen, einen Schwankungsbereich eines Sollwerts (OP) eines Regelungsbetrags zur Steuerung der zu überwachenden Vorrichtung (5) sowie Informationen, die einen Zustand der zu überwachenden Vorrichtung (5) angeben, die erfasst werden, wenn eine Anlage (3), die die Vielzahl von Vorrichtungen umfasst, für einen vorbestimmten Zeitraum betrieben wird; und
einen Lerner, der so ausgelegt ist, dass er auf der Grundlage der Lerndaten ein Erkennungskriterium zum Erkennen einer Abnormalität der zu überwachenden Vorrichtung (5) auf der Grundlage eines Indexes erlernt, der sich auf eine Beziehung zwischen dem Schwankungsbereich des Prozesswerts (PV) und dem Schwankungsbereich des Sollwerts (OP) bezieht, **dadurch gekennzeichnet, dass**
der Index eine Größe oder eine Steigung eines Vektors ist, der einen Schwankungsbereich des Prozesswerts (PV) und einen Schwankungsbereich des Sollwerts (OP) als Komponenten aufweist.

## Revendications

1. Dispositif de détection d'anomalies (10) comprenant :
un dispositif d'acquisition de valeur de processus (21) conçu pour acquérir, pendant le fonctionnement d'une installation (3) comprenant une pluralité de dispositifs, une valeur de processus (PV) d'au moins un dispositif cible de surveillance (5) parmi ladite pluralité de dispositifs ;
un acquéreur de valeur de commande (22) conçu pour acquérir une valeur de commande (OP) d'une quantité d'action de commande destinée à commander le dispositif cible de surveillance (5) ; et
un détecteur d'anomalies conçu pour détecter une anomalie du dispositif cible de surveillance (5) sur la base d'une relation entre une plage de fluctuation d'une valeur de processus (PV) acquise par l'acquéreur de valeur de processus (21) et une plage de fluctuation d'une valeur de commande (OP) acquise par l'acquéreur de valeur de commande (22) pendant une période prédéterminée, dans lequel
le détecteur d'anomalie est conçu pour détecter une anomalie du dispositif cible de surveillance (5) à l'aide d'un critère de détection permettant de détecter une anomalie du dispositif cible de surveillance (5) sur la base d'un indice lié à la relation entre une plage de fluctuation de la valeur de processus (PV) et une plage de fluctuation de la valeur de commande (OP),
**caractérisé en ce que**
l'indice est une amplitude ou une pente d'un vecteur ayant pour composantes une plage de fluctuation de la valeur de processus (PV) et une plage de fluctuation de la valeur de commande (OP).

2. Dispositif de détection d'anomalies (10) selon la revendication 1, dans lequel
le critère de détection est appris par une machine sur la base d'une plage de fluctuation de la valeur de processus d' s (PV), d'une plage de fluctuation de la valeur de commande (OP) et d'un état du dispositif cible de surveillance (5) au cours d'une période prédéterminée passée.

3. Dispositif de détection d'anomalies (10) selon l'une quelconque des revendications 1 ou 2, dans lequel
le détecteur d'anomalie est conçu pour détecter une anomalie du dispositif cible de surveillance (5) lorsqu'une relation entre une plage de fluctuation de la valeur de processus (PV) et une plage de fluctuation de la valeur de commande (OP) se situe en dehors d'une plage normale.

4. Dispositif de détection d'anomalies (10) selon l'une quelconque des revendications 1 à 3, dans lequel
le dispositif de détection d'anomalies (10) détermine une anomalie sur la base d'une tendance selon laquelle la forme d'une région rectangulaire, dont la longueur horizontale correspond à la plage de fluctuation de la valeur de processus (PV) et dont la longueur verticale correspond à la plage de fluctuation de la valeur de commande (OP), s'allonge horizontalement ou verticalement par rapport à la forme observée lors d'un fonctionnement stable, ou s'agrandit tout en conservant la même forme.

5. Dispositif de détection d'anomalies (10) selon la revendication 4, dans lequel
le dispositif de détection d'anomalie (10) affiche l'évolution temporelle de la forme de la zone sur un dispositif d'affichage (12).

6. Dispositif de détection d'anomalies (10) selon l'une quelconque des revendications 1 à 5, dans lequel
le détecteur d'anomalies est conçu pour détecter une anomalie du dispositif cible de surveillance (5) en se basant en outre sur une valeur de consigne de la quantité d'action de commande au cours de la période prédéterminée.

7. Programme de détection d'anomalies amenant un ordinateur à fonctionner en tant que
un acquéreur de valeur de processus (21) conçu pour acquérir, pendant le fonctionnement d'une installation (3) comprenant une pluralité de dispositifs, une valeur de processus (PV) d'au moins un dispositif cible de surveillance (5) parmi ladite pluralité de dispositifs ;
un acquéreur de valeur de commande (22) conçu pour acquérir une valeur de commande (OP) d'une quantité d'action de régulation destinée à réguler le dispositif cible de surveillance (5) ; et
un détecteur d'anomalie conçu pour détecter une anomalie du dispositif cible de surveillance (5) sur la base d'une relation entre une plage de fluctuation d'une valeur de processus (PV) acquise par l'acquéreur de valeur de processus (21) et une plage de fluctuation d'une valeur de commande (OP) acquise par l'acquéreur de valeur de commande (22) pendant une période prédéterminée, dans lequel
le détecteur d'anomalie est conçu pour détecter une anomalie du dispositif cible de surveillance (5) à l'aide d'un critère de détection permettant de détecter une anomalie du dispositif cible de surveillance (5) sur la base d'un indice lié à la relation entre une plage de fluctuation de la valeur de processus (PV) et une plage de fluctuation de la valeur de commande (OP),
**caractérisé en ce que**
l'indice est une amplitude ou une pente d'un vecteur ayant pour composantes une plage de fluctuation de la valeur de processus (PV) et une plage de fluctuation de la valeur de commande (OP).

8. Dispositif d'apprentissage (40) configuré pour apprendre le critère de détection utilisé par le dispositif de détection d'anomalie selon l'une quelconque des revendications 1 à 6, comprenant :
un acquéreur de données d'apprentissage structuré pour acquérir, en tant que données d'apprentissage, une plage de fluctuation d'une valeur de processus (PV) d'au moins un dispositif cible de surveillance (5) parmi une pluralité de dispositifs, une plage de fluctuation d'une valeur de commande (OP) d'une quantité d'action de commande destinée à commander le dispositif cible de surveillance (5), et des informations indiquant un état du dispositif cible de surveillance (5), qui sont acquises lorsqu'une installation (3) comprenant la pluralité de dispositifs est exploitée pendant une période prédéterminée ; et
un dispositif d'apprentissage conçu pour apprendre un critère de détection permettant de détecter une anomalie du dispositif cible de surveillance (5) sur la base d'un indice lié à la relation entre la plage de fluctuation de la valeur de processus (PV) et la plage de fluctuation de la valeur de commande (OP) à partir des données d'apprentissage, **caractérisé en ce que**
l'indice est une amplitude ou une pente d'un vecteur ayant pour composantes une plage de fluctuation de la valeur de processus (PV) et une plage de fluctuation de la valeur de commande (OP).
